# EUROPEAN PATENT APPLICATION

(11) **EP 4 790 557 A1**
(43) Date of publication of application: **12.08.2026**
(21) Application number: 25305166.8
(22) Date of filing: 05.02.2025
(51) Int. Cl.: G06F 9/50, G06N 3/098

(54) **ADAPTIVE MODEL ASSIGNMENT AND REASSIGNMENT IN VERTICAL FEDERATED LEARNING**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: KHANFOUCI, Mourad, 35708 RENNES CEDEX 7 (FR); MESTOUKIRDI, Mohamad, 35708 RENNES CEDEX 7 (FR)
(74) Representative: Plasseraud IP

(57) **Abstract**

The disclosure relates to a method performed by a vertical federated learning, VFL server (10, 10a), the method comprising:
obtaining (31, 31a, 31b) client information for a plurality of VFL clients (11, 12, 13, 14, 11a, 12a, 13a, 14a), the client information for a VFL client including data indicative of a reliability and/or a resource availability of the VFL client;
transmitting (34, 34a, 34b) allocation instructions, the allocation instructions defining associations of local models to respective VFL clients, wherein the allocation instructions take account of the client information;
obtaining (35, 35a, 35b) an update to the client information for a VFL client during a use of a local model by the VFL client in a training task (22) or an inference task (23);
transmitting (36, 36a, 36b) at least one updated allocation instruction, an updated allocation instruction defining a reassociation of a local model to a respective VFL client, and wherein the at least one updated allocation instruction takes account of the update to the client information; and
transmitting (33, 33a, 33b) model information for at least one of the local models, the model information comprising one or more of a model importance, a model size, and a model complexity,
wherein the allocation instructions and/or the at least one updated allocation instruction take account of the model information.

## Description

### DOMAIN

The present invention relates to federated learning in distributed machine learning systems, and more particularly to methods and systems for dynamically assigning and reassigning local models to clients in a vertical federated learning (VFL) environment.

### BACKGROUND

In the field of federated learning (FL), machine learning models are trained across multiple decentralized clients without requiring direct access to raw data stored at each client. This enables privacy-preserving learning while leveraging distributed computing resources.

Vertical Federated Learning (VFL) is a specific form of federated learning where different clients hold different feature subsets of the same dataset, as opposed to horizontal federated learning, where clients hold different samples with the same feature set. VFL enables collaborative training across multiple data holders, each contributing a partial view of the overall dataset.

One key challenge in VFL deployments in communication networks, particularly within 5G or 6G core networks, is the dynamic reliability and resource availability of participating clients. For instance, Network Data Analytics Functions (NWDAFs) operating as VFL clients may experience fluctuations in computational resources, network congestion, or policy-based constraints, such as access restrictions to data collection from relevant network functions, affecting their ability to contribute to federated learning. These variations impact both training stability and inference accuracy, particularly when critical models are assigned to unreliable or resource-constrained clients.

Conventional VFL approaches assume static model assignments, where local models remain fixed with their initially assigned clients. However, this fails to account for real-time changes in client conditions, leading to suboptimal model performance, training inefficiencies, and potential inference failures when clients drop out or face resource limitations.

Accordingly, there is a need for an improved approach to model allocation in VFL.

### SUMMARY

The invention is defined by the appended independent claims. Additional features and advantages of the concepts herein disclosed are set forth in the description which follows.

The present disclosure aims at improving the situation.

To this end, the present disclosure describes a method performed by a vertical federated learning (VFL) server, the method comprising:
obtaining client information for a plurality of VFL clients, the client information for a VFL client including data indicative of a reliability and/or a resource availability of the VFL client;
transmitting allocation instructions, the allocation instructions defining associations of local models to respective VFL clients, wherein the allocation instructions take account of the client information;
obtaining an update to the client information for a VFL client during a use of a local model by the VFL client in a training task or an inference task;
transmitting at least one updated allocation instruction, an updated allocation instruction defining a reassociation of a local model to a respective VFL client, and wherein the at least one updated allocation instruction takes account of the update to the client information;
transmitting model information for at least one of the local models, the model information comprising one or more of a model importance, a model size, and a model complexity,
wherein the allocation instructions and/or the at least one updated allocation instruction take account of the model information.

The proposed method may enable a VFL server to improve the initial allocation of local models to VFL clients, by considering both client information and model information. In particular, by obtaining client information, including indicators of reliability and resource availability, the VFL server ensures that models are assigned to clients capable of effectively handling them. This avoids overloading less reliable or resource-constrained clients, improving the robustness of federated learning. By incorporating model information, such as model importance, model size, and model complexity, the allocation process ensures that critical models are handled by the most reliable and well-equipped VFL clients.

Additionally, the proposed method may further improve VFL performance by enabling adaptive reassignment of models based on updated client information before or during training and/or inference phases. Compared to conventional static model assignments, the proposed method prevents inefficient assignments where a high-importance model is given to a client with limited processing power or an unreliable connection, thereby maximizing learning efficiency and reducing the risk of failures in model training or inference. Reassignments consider both updated client information and model information, ensuring that models requiring high computational resources or low-latency processing remain with the most capable VFL clients. The dynamic update mechanism may allow federated learning tasks to proceed efficiently, reducing the need for retraining or restarting learning processes due to unreliable client participation.

Additionally, by transmitting model information, the proposed method may enhance decision-making at multiple levels. Clients gain awareness of the models they handle, allowing them to make informed decisions about resource allocation, parallel processing, and task prioritization. For instance, a client receiving multiple training or inference requests can prioritize models with higher importance. Further, the VFL server maintains a global understanding of model distribution, facilitating improved scheduling, model merging, or reassignments as needed.

The present disclosure also describes a system adapted for use by a vertical federated learning (VFL) server, the system being configured to:
obtain client information for a plurality of VFL clients, the client information for a VFL client including data indicative of a reliability and/or a resource availability of the VFL client;
transmit allocation instructions, the allocation instructions defining associations of local models to respective VFL clients, wherein the allocation instructions take account of the client information;
obtain an update to the client information for a VFL client during a use of a local model by the VFL client in a training task or an inference task;
transmit at least one updated allocation instruction, an updated allocation instruction defining a reassociation of a local model to a respective VFL client, and wherein the at least one updated allocation instruction takes account of the update to the client information; and
transmit model information for at least one of the local models, the model information comprising one or more of a model importance, a model size, and a model complexity,
wherein the allocation instructions and/or the at least one updated allocation instruction take account of the model information.

The present disclosure also describes a computer-readable storage medium, optionally a non-transitory computer-readable storage medium, having stored thereon a computer program comprising instructions which, when executed by a processor, cause the processor to perform the method hereby described.

The computer-readable storage medium may include various forms of storage, such as volatile memory (e.g., RAM) for temporary storage of processing data and non-volatile memory (e.g., ROM, flash memory, or solid-state drives) for storing the operational software and microstructure design templates. The memory is used to store the computer program comprising instructions for executing the described method.

The computer program, which is stored on the computer-readable storage medium, comprises instructions that are accessible to the processor. When executed, these instructions enable the processor to perform the described method. The computer-readable storage medium may include hard drives, solid-state drives, optical disks (e.g., CDs or DVDs), USB drives, or any other non-transitory storage medium capable of retaining the program. The program may be installed locally on the manufacturing device or system or accessed remotely via the communication interface.

The systems and methods described in the present disclosure may furthermore comprise the following features, taken alone or in combination.

In an example, the model information is transmitted before the use of the local model by the VFL client in the training task or the inference task.

In an example, the model information is transmitted during the use of the local model by the VFL client in the training task or the inference task.

In an example, an update to the model information is transmitted during the use of the local model by the VFL client in the training task or the inference task; and the at least one updated allocation instruction takes account of the update to the model information.

In an example, the client information for a VFL client includes a forecasted reliability indicator for the VFL client, the forecasted reliability indicator being computed based on historical data and/or expected resource availability over a time period.

In an example, the updated allocation instruction defining a reassociation of a local model to a VFL client takes account of a change in client reliability and/or resource availability of at least one other VFL client and/or of a change in model information of at least one other local model.

In an example, obtaining the update to the client information and/or the update to the model information is repeated at predefined intervals during training or inference.

In an example, the predefined intervals are dynamically adjusted based on a variability of the client information and/or of the model information.

In an example, the association or the reassociation of a local model to a newly allocated VFL client includes distributing model data of the local model to the newly allocated VFL client.

In an example, the allocation instructions and/or the at least one updated allocation instruction take into account a cost of transferring model data.

In an example, the client information includes communication latency metrics of the VFL clients.

In an example, the allocation instructions are generated based on a weighted combination of at least two among client reliability, resource availability, model importance, model size and model complexity.

In an example, the VFL server initiates reassociation only if the updated client information indicates a threshold change in client reliability, resource availability, model importance, or a combination of at least two thereof.

In an example, the VFL server stores the allocation instructions and/or the client information and/or the model information in a database for use in a subsequent use of the local model by the VFL client in a subsequent training task or a subsequent inference task.

### BRIEF DESCRIPTION OF THE DRAWINGS

Figure 1 depicts a known vertical federated learning technique.
Figure 2 is a block diagram depicting known stages of a vertical federated learning technique.
Figure 3 is a block diagram depicting a method performed by a vertical federated learning server in an exemplary embodiment.
Figure 4 depicts a signaling scheme adapted for a vertical federated learning technique in an exemplary embodiment.
Figure 5 depicts another signaling scheme adapted for a vertical federated learning technique in an exemplary embodiment.
Figure 6 depicts a processing circuit in an exemplary embodiment.

### DETAILED DESCRIPTION

This general description is intended to present an exemplary implementation of the invention. Variations, modifications, and alternatives may be apparent to those skilled in the art and can be made without departing from the scope of the invention. The specific configuration of components and the manner in which they interact are merely illustrative, and alternative configurations and interactions are within the scope of the appended claims.

The present disclosure relates to the field of vertical federated learning (VFL). More particularly, the present disclosure concerns techniques for allocating, reassigning, and managing local models among a plurality of VFL clients based on their respective capabilities, constraints, and reliabilities, in order to improve VFL-based training and inference tasks.

To facilitate understanding of the disclosure, some terms and expressions specific to this field are now defined. Unless otherwise specified, these definitions are intended to apply to all instances of such terms throughout this document and any appended claims.

As used herein, federated learning (FL) refers to a distributed machine learning paradigm in which multiple entities (sometimes referred to as FL clients) collectively train a machine learning model without necessarily sharing their respective raw data. Instead, each FL client processes its local data and shares locally computed parameters or parameter updates (e.g., model gradients or embeddings) with an aggregator or coordinating entity.

Vertical federated learning (VFL) is a particular type of federated learning in which each client holds a distinct subset of the features for a shared set of samples (or entities). In other words, the data is feature-partitioned across the VFL clients. One client, referred to as the active client or VFL server, typically possesses the labels (or ground truth values), coordinates the overall training process, and aggregates intermediate results (such as embeddings) sent by a star formation of other clients (referred to as passive clients).

Horizontal federated learning (HFL) is another type of federated learning in which each client has data containing the same set of features but pertaining to different samples (or different subsets of the sample space). This contrasts with VFL, in which each client holds different features for an overlapping set of samples.

In a VFL system, the active client, also referred to herein as a VFL server, is an entity that coordinates the distributed training or inference process. The active client typically: maintains or has access to the labels of the shared dataset,
aggregates embeddings or partial inferences from the other clients, performs the global model updates,
distributes gradients to the respective passive clients or otherwise coordinates model parameter updates,
etc.

In a VFL system, a passive client, also referred to herein as a VFL client, is any computationally capable machine or entity that holds a local partition of features describing a sample space, this sample space being shared with the other passive clients. Each passive client trains a local model on its feature subset to generate intermediate representations (e.g., embeddings), which are then sent to the active client. The passive client does not hold the global labels, although it may receive gradients or other information from the active client to update its local model parameters.

A local model, as used herein, refers to the machine learning (ML) sub-model or processing function executed at each passive client over its local features. The local model generates embeddings or partial predictions from that client's feature subset. These embeddings are then transmitted to the active client for aggregation and final prediction.

A global model (or inference model) is the part of the overall VFL model that resides with the active client. It takes as inputs the embeddings produced by the local models of the passive clients and outputs a final prediction. During training, the active client updates this global model based on the labels it holds.

Embeddings are intermediate representations output by the local models of the passive clients. They carry essential information about the local features without disclosing those features explicitly.

Features are the input variables used by a machine learning model to generate predictions. In vertical federated learning, each passive client controls a different subset of these features for the same underlying samples.

Labels are the ground truth values corresponding to a training or inference task. In a supervised learning context, they are used to evaluate and update the model. In VFL, the active client typically holds the labels.

A training task refers to the operation of learning or updating model parameters (including local and global model parameters) based on training data and labels (or other forms of feedback).

An inference task refers to using a trained model (both local models and the global model) to generate predictions for new samples. In VFL, each passive client generates embeddings of its local features, and these embeddings are then used by the active client's global model to produce final predictions.

Reliability in the context of VFL clients refers to the likelihood that a client remains responsive and performs its assigned tasks (e.g., providing embeddings or receiving gradients) throughout the training or inference process. Factors affecting reliability may include, for instance, connection stability, processing capacity, and availability guarantees.

Resource availability refers to computational, memory, storage, and network bandwidth resources available to a VFL client. Resource availability is generally a key factor in determining how efficiently a client may train, update, or infer using a local model.

Allocation instructions are commands or directives specifying which local model(s), feature subsets, or tasks are assigned to a given passive client in the VFL context. Allocation instructions may also specify scheduling and coordination details for model updates.

Data refers to any samples used for training or inference, including the features (input variables) and labels (ground truth values). In VFL, the feature portions of data are distributed among passive clients, while the labels typically reside at the active client.

The present disclosure applies to the use of vertical federated learning in various use cases, such as (but not limited to): telecommunications, industrial Internet of Things (IIoT), smart city services, supply chain management, automotive systems, data-driven marketing, energy grid optimization, retail analytics, public safety, insurance, healthcare analytics, financial services, etc. It is understood that the above list is provided merely by way of example, and that vertical federated learning may be applied to any environment or domain in which feature-partitioned data may be leveraged to improve machine learning models.

By way of example, a specific use case considered herein involves the management of a communication network, such as a 5G or 6G network.

In this use case, the vertical federated learning process involves finding the dependencies between application satisfaction (as the labels) and network behavior determining the application satisfaction (as the features), using samples of data corresponding to the different features.

As used herein, an application may refer to any computational or service-oriented software that benefits from machine learning for its operation, including but not limited to end-user service, network management, user-specific service recommendations, anomaly detection, or any other application where a usage of predictive modeling may be beneficial.

In this scenario, the VFL clients may be User Equipments (UEs) or other network nodes served by the communication network.

The vertical federated learning processes described in this disclosure may facilitate or enhance various network modeling and analytics functions, including but not limited to:
predicting user Quality of Experience (QoE) for different applications,
optimizing network resource allocation based on distributed feature subsets (e.g., network usage patterns, radio signal metrics, device state information),
improving reliability and quality of service by adapting the allocation of local models among UEs or network nodes,
etc.

Additional definitions are now provided in relation to the application of VFL to communication networks.

A communication network broadly refers to any system of interconnected devices and infrastructure enabling data exchange. For the purposes of this disclosure, communication networks primarily refer to mobile or cellular networks (e.g., 5G, 6G), although the concepts presented herein may also apply to wireline or hybrid networks.

As used herein, a network node refers to any logical or physical entity within a communication network that is configured to perform one or more networking or data processing functions. Examples of network nodes include, but are not limited to: base stations, access points, core network servers, gateways, routers, switches, edge servers, and user equipments (UEs). A network node may provide functionalities such as traffic routing, session management, data aggregation, or network analytics. These nodes may be interconnected in a wired or wireless manner and cooperate to provide communication services within, for example, a 5G or 6G mobile network, a company network, or any other suitable networking environment.

A User Equipment (UE) refers, in the context of 5G and 6G mobile networks, to any end device, such as a smartphone, tablet, sensor, or other communication-capable apparatus that may connect to a RAN and access core network services.

A 5G network (Fifth-Generation mobile network) is a set of network technologies defined under standards such as 3GPP Releases 15 and beyond. From an architectural standpoint, a 5G network typically comprises a Radio Access Network (RAN) and a Core Network, with a clear separation of the control plane and the user plane.

The Radio Access Network includes network nodes (e.g., gNodeBs, or gNBs) that provide radio connectivity to user equipments (UEs). These gNodeBs handle radio transmission, scheduling, and other functions related to the radio interface.

The 5G Core Network, sometimes referred to as "5GC", manages higher-level functionalities such as authentication, policy control, session management, and data routing. It may include various network functions (e.g., Access and Mobility Management Function

(AMF), Session Management Function (SMF), User Plane Function (UPF), and Network Data Analytics Function (NWDAF)) that collectively provide end-to-end services to UEs.

A 6G network refers to a future generation (beyond 5G) of mobile communication technology.

A Network Function (NF) may include any functional building block within a 5G or 6G core network that provides a well-defined network service (e.g., user authentication, session management, policy control, or data routing). In the context of VFL, each NF could hold specialized data features relevant to network performance or user behavior.

The Network Data Analytics Function (NWDAF) is a network function defined under 3GPP Technical Specification TS 23.288. The NWDAF collects and analyzes data from various network entities within, for example, a 5G core network. By performing advanced analytics on these data, the NWDAF may provide insights to other network functions, such as policy control or management entities. The NWDAF may serve as the active client (i.e., the VFL server) in certain embodiments, orchestrating a VFL training or inference process where the passive clients are other network nodes or UEs holding different subsets of features.

By way of illustration, the NWDAF in a 5G or 6G network (serving as the VFL server) may maintain a database of features, client reliabilities, and resource availabilities. It may provide initial allocation instructions for local models to different UEs (passive clients), and upon receiving updates, for example, an indication that a given UE is about to go offline, the NWDAF may promptly reassign the corresponding local model to a more reliable UE. This ensures a seamless training or inference process and minimizes potential performance drops caused by client unavailability.

The control plane is responsible for signaling, device registration, connection setup, session management, and policy enforcement. It includes network functions that oversee how user plane resources are allocated and managed, but do not typically carry user data themselves.

The user plane is dedicated to the transmission and routing of end-user data traffic. In 5G and 6G, the user plane is often anchored by the UPF in the core network and gNodeBs in the RAN.

In light of the above definitions, the present disclosure describes systems and methods for improving the performance, reliability, and adaptability of vertical federated learning processes by using client information and model information to dynamically assign or reassign local models to VFL clients.

This includes addressing scenarios in which passive clients may fail, become temporarily unavailable, or offer different computational resources, thereby affecting both training and inference phases of VFL.

Client information is associated to a specific VFL client or group of VFL clients and may include various types of indicators, including for instance:
a reliability indicator,
a resource availability indicator,
a resource capacity indicator,
a latency indicator,
an indicator of past participation stability in previous federated learning tasks,
an indicator of constraints on data exposure, particularly in cases where a VFL client is subject to policy-based restrictions on feature sharing,
an indicator combining a plurality of the above aspects,
etc.

Model information is associated with a specific local model or group of local models and may include various types of indicators, including, for instance:
a model importance indicator,
a model complexity indicator,
a model size indicator,
a training stability indicator,
a model convergence speed indicator,
an inference efficiency indicator,
an indicator of adaptation to varying data distributions,
an indicator of transferability,
an indicator combining a plurality of the above aspects,
etc.

Model importance refers to an indication of how crucial a particular local model is to the overall prediction performance (e.g., how heavily its features or embeddings weigh on the final outcome).

Model size refers to the number of parameters in the local model (or the storage size required for that model).

Model complexity refers to a characterization of how computationally demanding it is to execute or update the model (e.g., number of layers in a neural network, number of operations needed for a forward pass, etc.).

In a typical vertical federated learning (VFL) architecture, as described in state-of-the-art approaches, there is, formally:
a set of *N* VFL clients equipped with N local models {*h*_{θ₁}*, h*_{θ₂}*,* ··· *, h*_{θ_{N}}} parameterized by θ*ᵢ*, and each endued with dataset *Dᵢ* associated to a feature partition 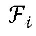 ⊂ {*x*₁*,x*₂*,* ··· *, x_{M}*}*,* ∀*i* ∈ {1,2, *··· , N*}*,* characterizing *K* samples (i.e. *Dᵢ* ∈ 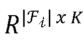 ), and a VFL server equipped with the samples labels Y ∈ *R^{K x d},* where d denotes the dimensionality of the label space, and a global model *f*_{ϕ} parametrized by ϕ.

Under these known techniques, the principal objective of VFL is to train a distributed (i.e. split) model such that the training risk is minimized according to : ${min}_{ϕ , \left\{{θ}_{1}, {θ}_{2}, ⋯, {θ}_{N}\right\}} F \left({f}_{ϕ}\left({h}_{{θ}_{1}}\left({D}_{1}\right),⋯,{h}_{{θ}_{N}}\left({D}_{N}\right)\right),Y\right)$ where F is a loss function that evaluates the average deviation of the predicted labels of the training samples *Ŷ* = *f_{ϕ}* (*h*_{*θ*₁}(*D*₁)*, ··· ,, h_{θ_{N}}*(*D_{N}*))*,* and the actual labels *Y.*

While these state-of-the-art VFL techniques have demonstrated effectiveness in protecting data privacy and boosting model accuracy by leveraging distributed feature subsets, they assume ideal conditions of client reliability and communication. Specifically, it is assumed that each client remains available and responsive during both the training and inference phases, and that there are no disruptions or failures. Under practical conditions, however, this assumption may lead to over-estimation of the actual performance of the VFL process.

Several prior approaches have attempted to address reliability concerns.

For instance, according to a known approach, the potential quitting of clients during the inference phase is handled by incorporating synthetic drop-outs in the training phase and accordingly, adapting the trained VFL model to such events during inference. While effective, this known approach relies on the knowledge of the quitting probability for each of the clients during the test time which has proved difficult in practical cases. Moreover, this known approach ignores in its implementation the fact that the degradation in performance may stem from the failure of clients with the most important features relative to the inference task, which can't be accounted for due to assumption about the locality of the feature partitions generation among the passive clients.

According to another known approach, the probability of the failure of the VFL inference process due to the failure of the VFL server - a single point of failure - may be reduced by allowing several VFL clients to replace the active client role adaptively. While this approach is relevant in some scenarios, the possibility of client failure is not restricted only to the inference phase, and accordingly, this known approach fails to compensate for possible failures during the training phase which may hinder the performance of both the training and inference phases.

Moreover, the known approaches are limited in scope and may not be compatible to some controlled centralized settings. Particularly, their implementation side steps the fact that in some settings, feature association depends on factors beyond the immediate data collection abilities of the decentralized VFL clients.

To overcome the limitations of the known approaches, the present disclosure proposes a technique for enhancing vertical federated learning (VFL) by assigning feature partitions to VFL clients from a centrally maintained feature pool. Unlike conventional methods that assume each client's local feature subset is predetermined solely by its immediate data collection capabilities, this technique accounts for one or more additional factors, which may include for instance client reliability, resource availability, feature importance, and/or overall system performance objectives. By taking such factors into consideration, the proposed technique provides a more flexible and robust VFL process.

The proposed technique may indeed enable vertical federated learning systems to make more efficient use of the available features, especially when those features differ significantly in terms of model accuracy contribution, computational overhead, or data relevance. Concretely, if certain features prove especially critical to achieving a lower loss function (or improving user satisfaction predictions), the VFL server may assign those features to the most reliable or resource-rich clients. Conversely, less pivotal features might be allocated to clients whose availability or connectivity is more limited. As a result, the proposed technique may not only improve overall model performance but may also mitigate risks associated with client failures or drop-outs.

A particularly relevant application of the proposed technique arises in 5G or 6G networks, where large volumes of features may be gathered from various Network Functions (NFs), such as the Access and Mobility Management Function (AMF), Session Management Function (SMF), and Policy Control Function (PCF). These features may be stored in a central database for subsequent analysis by the NWDAF.

Here, rather than relying on each NF to provide whichever features happen to be locally available, a central orchestrator such as the NWDAF may be used to dynamically determine and assign the most beneficial feature subsets to each participating VFL client. By acting as this central coordinator, the NWDAF may balance a wide array of constraints, such as client reliability, resource constraints, and feature importance, in order to optimize network-wide objectives (for instance, maintaining or improving Quality of Experience (QoE) for end-user applications). This centralized assignment capability ensures a more robust and efficient utilization of the features, especially when certain subsets of features are more computationally demanding or disproportionately critical to achieving accurate predictions.

In practice, however, multiple NWDAFs may be deployed within the same 5G or 6G system, and they themselves may be subject to unreliability, particularly when coordinating large-scale VFL tasks. Such unreliability may slow VFL convergence and degrade the model's capacity to learn relationships pertinent to user satisfaction or other network performance metrics.

These challenges may be addressed by incorporating NWDAF reliability as a key factor in deciding how features and local models are assigned.

Although the exemplary implementations mainly discussed in this document focus on NWDAF reliability (or lack thereof) within a mobile communication network, the same underlying principle applies to any VFL client reliability (or lack thereof) arising from real-world operational disruptions in other environments or systems of interest.

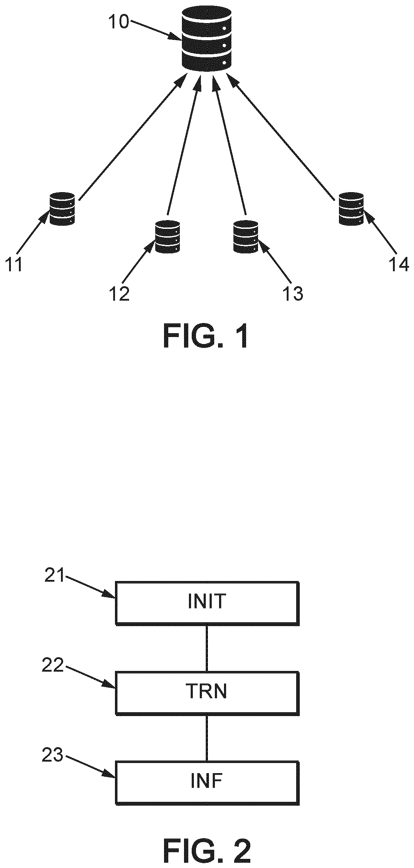

It is now referred to Figure 1, which depicts, in an example use case of the proposed technique, a vertical federated learning system that comprises a VFL server 10 and multiple VFL clients 11, 12, 13, 14 located in a network data analytics function (NWDAF) of a 5G core network. In other words, both VFL server 10 and the VFL clients 11, 12, 13, 14 are NWDAF-based.

Within this system, each VFL client is configured to learn a local model and thusly participate to an overall VFL objective, where the local model depends on a local feature subset collected at that VFL client.

From the viewpoint of the VFL server 10, the VFL clients 11, 12, 13, 14 may be considered unreliable, as the VFL server cannot fully rely on their continuous availability or consistent performance throughout the lifecycle of training and inference.

In this context, a reliability indicator refers to an indicator representing the reliability of a VFL, in other words the likelihood that each VFL client will successfully participate without significant disruption.

The reliability indicator may be influenced by one or more of the following factors: availability of the NWDAF function during VFL training and inference;
load changes affecting the NWDAF (e.g., increased processing demands);
quality of the communication channel between the VFL client and the VFL server (e.g.,
latency, packet loss, or bandwidth issues);
exposure constraints related to NWDAF output, particularly if the VFL client resides in a different core network;
failure rate of the NWDAF;
virtual computational resources currently accessible by the NWDAF; and any aggregate function or combination of the above factors reflecting overall NWDAF reliability.

Each local model further carries a model importance, which indicates how critical that local model is relative to the overall VFL objective.

The VFL server may obtain or estimate the model importance of each local model using various indicators, including the magnitude of its contribution to reducing the global training loss, the diversity or uniqueness of the features handled by that model, or the potential impact of losing that model (for instance, if its features are not easily replaced by other clients).

The model importance may be evaluated either before training commences, by analyzing feature subsets and preliminary model architecture, or during training, by monitoring changes in performance when that client's updates are withheld or when the client becomes temporarily unavailable. A similar evaluation may also occur before or during inference, particularly if real-time updates reveal shifts in data distribution or network usage patterns. Reevaluation of model importance may be relevant, for instance, to correctly address a scenario where a local model is provided with random feature values generated by a faulty sensor, in which case the feature values provided to the local model are not correlated anymore to the labels and the local model using those features renders useless.

According to the proposed technique, the lifecycle of a vertical federated learning (VFL) process involving multiple unreliable NWDAFs in a 5G (or 6G) core network may be divided in three broad phases, each focusing on distinct tasks, as outlined on Figure 2:
an initialization phase 21,
a training phase 22, and
an inference phase 23.

The initialization phase focuses on preparing the VFL system for subsequent training. During this phase, the VFL server may collect or predict a reliability indicator for each VFL client, identify or construct local model architectures based on a feature association process and determine the initial importance values of these local models. These importance values may be derived by analyzing each model's anticipated contribution to the global training objective based on the associated features as well as the expected effect of unreliability on that contribution.

During the training phase, each VFL client uses the assigned model and its associated feature subset to produce local updates, which are then aggregated at the VFL server. The server may continually monitor variations in reliability and model importance, allowing it to reassign or redistribute models when, for instance, a VFL client's reliability profile (i.e. the variation over time of the reliability indicator of this VFL client) degrades to an extent that may hinder training progress. This dynamic adaptation helps maintain stable convergence, even when system conditions fluctuate due to, for instance, resource constraints or communication issues.

During the inference phase, local models have been trained and stored with their corresponding importance indicators. The VFL server selects the VFL clients best suited to carry out inference tasks, taking into account real-time reliability indicators and computational capacity or availability. If an NWDAF's reliability deteriorates or if a new high-priority inference request emerges, the VFL server may respond by relocating a local model to a more reliable VFL client.

In this way, the VFL system preserves the benefits of vertical federated learning such as leveraging diverse feature partitions and avoiding centralized data sharing while mitigating the risks inherent in NWDAF unreliability.

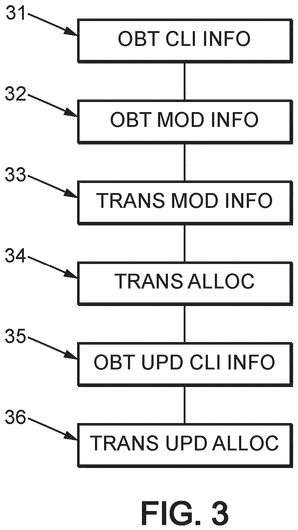

According to an exemplary implementation as illustrated in Figure 3, the VFL server 10 may be configured to:
obtain 31 client information of each NWDAF acting as a VFL client 11, 12, 13, 14 (or coordinating node) in the VFL system, the client information comprising a reliability indicator of each NWDAF,
obtain 32 model information of models at the VFL server, either before or during training (for instance importance indicators of such models), and
manage client participation by transmitting 34 instructions for assigning or reassigning models to NWDAFs based on both the client information and the model information.

Additionally, the VFL server may be configured to transmit 33 the model information associated with the assigned or reassigned local models, for instance to the VFL clients or to a Client Management Function.

Additionally, the VFL server may be configured to perform adaptive model matching during VFL training 22 and inference 23, by continuously:
obtaining 35 updates to the client information, including updated NWDAF reliability indicators,
reassessing these reliability indicators, and
transmitting 36 instructions for reassigning models or feature subsets as needed.

This implementation helps ensure that critical features and models remain with the most reliable NWDAFs, thereby preserving consistent performance and stable convergence of the VFL process.

In the event that a previously reliable NWDAF acting as a VFL client becomes compromised or experiences resource limitations, the system may promptly relocate the relevant model or feature subset to a more capable client. In this manner, the VFL server maintains robustness against failures during both training and inference phases.

Consequently, such an implementation may enable a 5G or 6G core network to sustain high-quality analytics and application satisfaction predictions, by retaining the inherent advantages of vertical federated learning, including privacy preservation, feature diversity, and load-balancing while substantially improving robustness of training and inference performance even under conditions of fluctuating NWDAF reliability.

Two distinct configurations are now discussed.

In a first configuration, the network operator or VFL server has access to a globally managed feature pool prior to training. This enables a centralized determination of how features are assigned to each VFL client, along with a centralized derivation of local model architectures and a preliminary assessment of each model's importance.

In the second configuration, the core network does not maintain any globally accessible dataset or feature pool. Each VFL client instead manages its own local features according to network policies, which may be issued by a Policy Control Function (PCF) or other analytics-enabling functions within the core network. Consequently, unlike in the first configuration, the VFL server does not centrally partition features or predefine local model architectures before training. Rather, each VFL client independently determines the architecture of its local model based on its assigned features and available computational resources. The VFL server still estimates model importance, but this estimation is not performed a priori but only dynamically, by monitoring how each locally derived model affects training or inference performance.

The principal distinction between the first configuration and the second configuration therefore lies in whether the VFL server may directly partition features and predefine local model architectures on a system-wide basis, or whether such partitioning and architecture derivation remain decentralized at the VFL clients.

Having outlined this distinction, it is useful to compare how each configuration operates during the initialization phase, the training phase, and the inference phase.

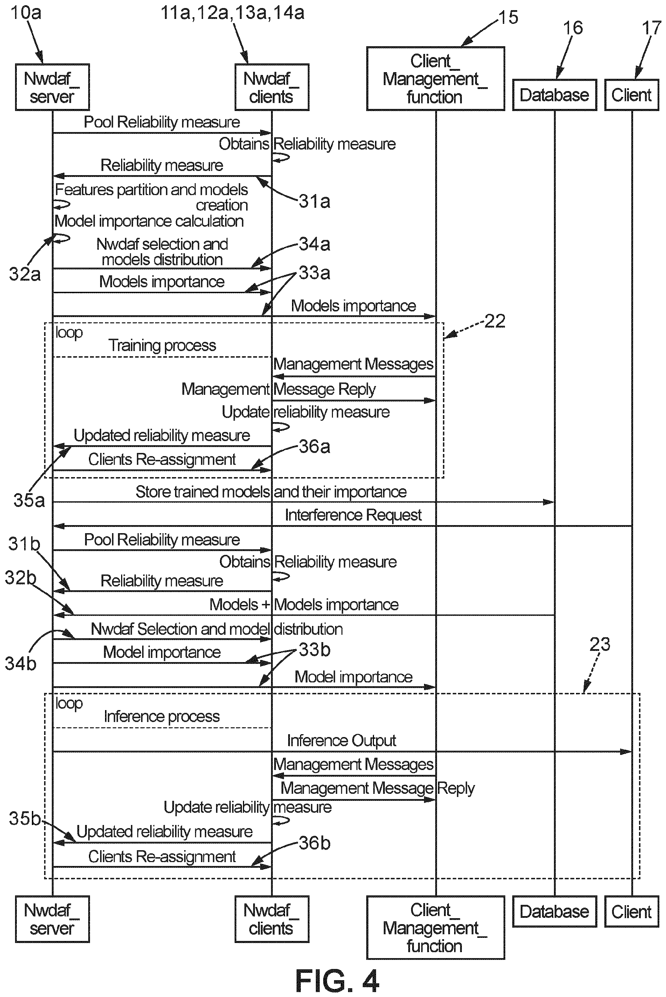

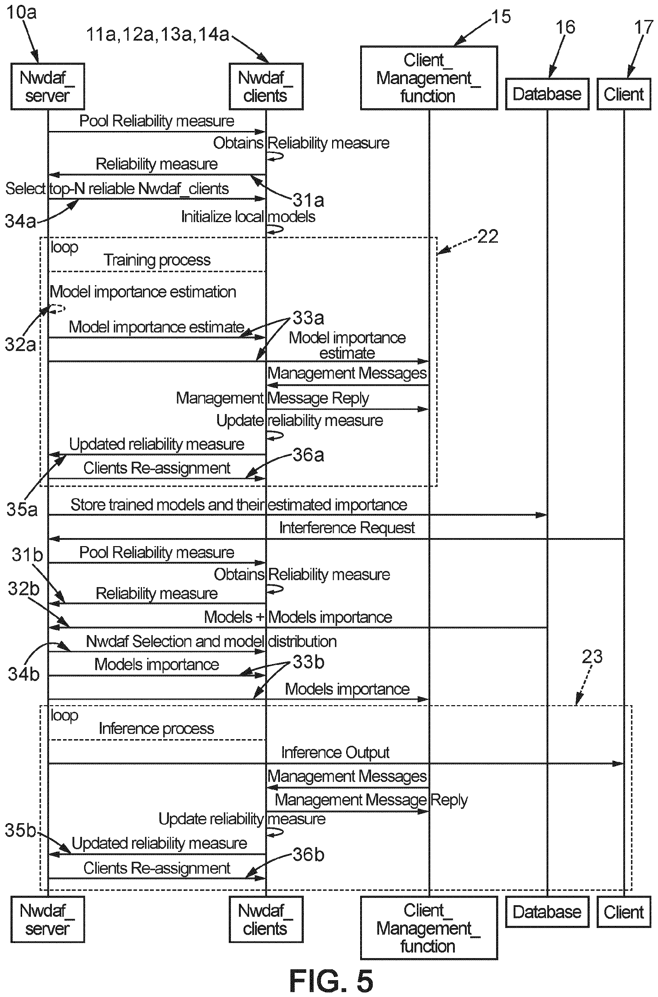

Figures 4 and 5 illustrate possible workflows for the VFL process in both configurations.

Figure 4 depicts a possible workflow for the initialization, training, and inference phases according to the first configuration.

Figure 5 depicts a possible workflow for the initialization, training, and inference phases according to the second configuration.

In both Figures 4 and 5, the underlying VFL system comprises the same fundamental elements:
a NWDAF-based VFL server 10a, and
a plurality of NWDAF-based VFL clients 11a, 12a, 13a, 14a.

Additionally, the VFL system may be adapted to interact with a Client Management Function 15 responsible for handling the VFL clients.

A database 16 may further be provided, in which case the VFL system may interact with the database to read and write data.

Additionally, the VFL system may be adapted to receive an inference request from a client 17 and transmit an inference response.

A possible workflow for the initialization phase 21 according to the first configuration is now described, as illustrated in Figure 4.

According to this workflow, the VFL server obtains 31a client information for a plurality of VFL clients, where the client information includes a reliability indicator.

The reliability indicator may be derived from historical operational metrics or from forecasts regarding the client's continuity of service, while the resource availability indicator may be based on historical operational metrics or from forecasts regarding the client's computational hardware capacity.

The reliability indicator of a VFL client may, for example, be determined by analyzing past patterns of participation or by predicting future load conditions that might prevent the client from consistently contributing to the VFL training or inference processes.

Alternatively, or in combination with the reliability indicator, the client information may further include a resource availability indicator of a VFL client, which may be characterized by the amount of hardware processing power and memory that is projected to be available over the duration of training and inference. In practice, this may involve determining or estimating the VFL client's ability to handle a local model of a certain complexity in conjunction with its assigned feature partition.

The complexity of a local model may itself be understood as a function of:
the model size, typically proportional to the number of parameters, and/or
the memory required to process the assigned features, which might be further influenced by batch sizes or the volume of data that the client expects to handle.

Having collected information pertaining to reliability and/or resource availability and/or capacity for each VFL client, the VFL server then obtains or otherwise determines an importance of dataset features on a global basis. This may involve analyzing how each feature (or feature subset) contributes to reducing the overall loss function, or how predictive each feature subset is of the target variable (for instance, application satisfaction). The resulting analysis provides an indication of which features are comparatively more critical to model accuracy.

The VFL server centrally calculates a feature partitioning strategy by balancing the importance of each feature subset with the resource constraints and reliability profiles of the VFL clients. Put differently, the server decides how to distribute (and possibly group) features among the local models so as to optimize system performance and mitigate failures or drop-outs. On that basis, the server proceeds to derive the local model architectures, associate each derived model to a VFL client and transmit 34a instructions reflecting these associations to the VFL clients.

Once the local models have been derived and assigned, the VFL server determines 32a or evaluates the importance of each local model by considering the criticality of its associated feature subset and, if applicable, preliminary assessments of how this model might contribute to the final inference task. The server then communicates 33a this model importance to the VFL clients or to the Client Management Function, enabling the VFL clients to prioritize or allocate resources accordingly.

Once the model importance has been determined and signaled (directly or indirectly) to a VFL client, it may serve for this VFL client as a key factor in managing resource allocation and task prioritization during subsequent training and inference phases.

Let us consider a situation in which two distinct VFL servers, each operating with separate training objectives, share access to a common pool of VFL clients.

In such a situation, during a training or inference phase for a given training objective of VFL server 10, a VFL client may simultaneously receive a request from another VFL server to participate in a separate training or inference process.

The acceptance of the VFL client to join the new training or inference request may alter the VFL client reliability in the ongoing training or inference phase.

When faced with such concurrent requests, the VFL client may determine whether to accept or decline the new request based on:
an assessment of the model importance associated with the ongoing task assigned by VFL server 10 and, if available, of the model importance associated with the newly introduced request, and/or
its own computational capacity.

Therefore, as model importance values are centrally determined and signaled to VFL clients in the initialization phase, each VFL client has a predefined basis for evaluating competing requests, reducing potential conflicts in resource allocation.

This mechanism may contribute to improve priorization of highly important local models and allocation of these local models to the most reliable and capable VFL clients, even in situations where a VFL client may be requested to participate in multiple VFL systems at once.

A possible workflow for the initialization phase 21 according to the second configuration is now described, as illustrated in Figure 5.

According to this workflow, the VFL server obtains 31a client information for a plurality of VFL clients. The client information for each VFL client includes at least one indicator of reliability and/or resource availability and/or resource capacity. The client information serve as indicator of the ability of each VFL client ability to sustain participation in the VFL training and inference processes. While this step is similar to the client information obtention in the first configuration, a distinction is that in the second configuration, the VFL server does not use these parameters to allocate specific feature partitions or derive local models. Instead, the VFL server uses the client information to determine which clients are best suited to participate in the training process, potentially considering a cost of re-routing a subset of features from a VFL client having generated the subset of features to a newly assigned VFL client if a reassignment is necessary. The VFL server then transmits 34a instructions to the selected VFL clients, the instructions enabling the selected VFL clients to initialize local models.

Another difference from the first configuration is that, in the second configuration, local model architectures are not centrally derived by the VFL server but are instead determined locally by each VFL client. Each client constructs its own model based on the features it has access to and its computational hardware capacity. This decentralized approach allows each client to adapt its model to its specific feature subset but also means that, in some cases, models may vary more significantly between clients compared to the centrally assigned models in the first configuration.

Another distinction is the timeline for determining model importance. In the first configuration, model importance is evaluated before training begins, based on the centrally determined feature partitions. In contrast, in the second configuration, model importance is not predetermined before training but is instead estimated 32a dynamically by the VFL server as training 22 progresses. The VFL server evaluates the impact of each model on global learning objectives and informs 33a each VFL client (or a client management function) of its local model's importance throughout the training phase. As a result, the initialization phase in the second configuration does not conclude before training begins but instead overlaps with the early stages of training, as model importance must first be inferred from training interactions before it may be used to guide subsequent resource allocation and prioritization. This continuous evaluation means that prioritization decisions regarding model allocation and resource distribution are made in real time, rather than being predefined at the outset.

With these differences in model derivation and importance evaluation established, the rest of the initialization phase proceeds similarly to the first configuration, with the server finalizing its selection of VFL clients for participation in the training process. Since models are locally defined, the server's role at this stage primarily involves overseeing client selection rather than assigning predefined models and feature partitions.

The training and inference phases later handle adjustments to model distribution based on real-time changes in reliability, computational resources, and model importance.

A possible workflow for the training phase 22 according to the first configuration is now described. In this configuration, the training phase begins once the VFL server has assigned feature partitions, derived local model architectures, and transmitted 34a, 33a both the models and their corresponding importance values to the VFL clients.

Each VFL client trains its assigned local model using its allocated subset of features in a vertical manner, meaning that the full dataset remains distributed among multiple clients, with the VFL server aggregating updates rather than directly accessing raw data.

To facilitate access to the relevant feature subsets, each VFL client may establish event notification subscriptions, for instance in line with protocols standardized in TS 23.288, to retrieve its assigned features from the database where they are stored. A subset of features associated to a local model may be assigned an identifier to facilitate its retrieval in the database.

Throughout the training phase, the VFL server may signal updated model importance values to the selected VFL clients and/or to a client management function, enabling the system to prioritize reliability for VFL clients handling more important models.

If, during training, a VFL client receives a new training or inference request from another VFL system, and upon acceptance of this request, the VFL client may steer its resources, autonomously or under the instruction of the Client Management Function (CMF) according to the relative importance of the models involved. This ensures that resources are allocated efficiently across concurrent VFL operations. Additionally, upon accepting a new request and/or periodically, a VFL client may update its client information, such as its current reliability indicator, to reflect the potential impact of handling multiple tasks. The VFL client may then transmit 35a the updated client information to the VFL server 10, which originally assigned a local model to the VFL client, so that the VFL server 10 may reassess the reliability indicator of the VFL client and, if necessary, adaptively redistribute local models among other VFL clients.

In some cases, and even in the absence of a concurrent training or inference request, maintaining the original model-client assignments throughout training may not be optimal, particularly if the reliability indicator of a VFL client deteriorates or if another VFL client demonstrates better availability or resources. In such situations, the VFL server 10 may transmit 36a instructions for reassigning a local model from one VFL client to another.

In this context, the original VFL client refers to the VFL client that was initially assigned the local model before the reassignment takes effect, while the new VFL client refers to the VFL client to which the local model is reassigned.

The reassignment of a local model during training may occur, for instance, under the following conditions:
if another VFL client demonstrates a higher reliability compared to the original VFL client, provided that the redistribution aligns with established computational hardware constraints; and/or
if the original VFL client lacks sufficient resources to effectively continue training the assigned local model.

To facilitate model reassignment, the original VFL client may be configured to store its intermediate local model in a shared model database (e.g. the database 16).

The new VFL client may then request the local model from the database under the instruction of the VFL server. Once the model is retrieved, training may resume at the new VFL client, ensuring continuity in the learning process without requiring a complete restart.

Upon completion of training (or model convergence), the trained models, along with their respective importance values and/or the identifiers of their associated feature partitions, may be stored in a central model database (e.g. the database 16). These stored importance values may later guide the adaptive model distribution process in the inference phase 23.

A possible workflow for the training phase 22 according to the second configuration is now described. In contrast to the first configuration, where local model architectures and feature partitions are centrally determined before training begins, the second configuration involves a more decentralized training process. Here, each VFL client constructs its own local model based on its assigned features and available computational resources. Training then proceeds using these locally derived models.

A key distinction in this configuration is that model importance is not predefined before training but is instead dynamically estimated 32a by the VFL server throughout the training phase 22. The VFL server assesses the contribution of each local model to the overall learning objective by monitoring variations in training loss or other relevant performance metrics. If a VFL client temporarily drops from training (for example, due to a reliability issue), the server may evaluate the resulting impact on training loss to infer how critical that client's model is to the overall process. In some cases, if all VFL clients exhibit high reliability, the server may synthetically exclude certain clients for limited rounds of training to estimate the potential performance degradation and refine prioritization of models accordingly.

As in the first configuration, VFL clients may receive new training or inference requests from other VFL systems while training is in progress. In such cases, the decision to accept a new request is based on the relative importance of the models involved and the computational capacity of the client. Additionally, upon accepting a new request, a VFL client may update its client information, such as its reliability indicator, to reflect the impact of handling multiple tasks and inform the VFL server of this change. This allows the VFL server to reassess client reliability indicator and, if needed, adaptively redistribute local models to better balance system performance.

As in the first configuration, if a VFL client's reliability declines significantly during training, the VFL server may take corrective action by reassigning the local model to another VFL client with higher reliability. This reassignment process follows a similar approach as in the first configuration. In this context, the original VFL client refers to the VFL client that was initially assigned the local model before the reassignment, while the new VFL client refers to the VFL client that is newly assigned the local model after reassignment.

When reassignment occurs, the original VFL client first stores its intermediate local model in a shared model database (e.g. the database 16). Unlike in the first configuration, where feature partitions are centrally managed, here, the reassignment may also involve re-routing the relevant features from the original VFL client to the new VFL client. To achieve this, the original VFL client broadcasts a re-routing instruction for the corresponding feature data to the new VFL client, under the coordination of the VFL server. The new VFL client then retrieves the stored model from the database and subscribes to the relevant feature streams, ensuring continuity in training without requiring a full model reset. Once these operations are completed, training resumes at the new VFL client.

As in the first configuration, upon completion of training, the trained models, along with their dynamically assessed importance values, are stored in a central database (e.g. the database 16). These stored importance values may later guide an adaptive model distribution process during the inference phase.

While the first and second configurations differ in terms of model derivation, feature allocation, and model importance assessment, they are not necessarily mutually exclusive. In some deployments, a system initially following the second configuration - where VFL clients independently construct their models - may later transition toward a structure more closely resembling the first configuration, where local models and features are pooled in a central repository. However, such a transition may introduce significant signaling overhead, particularly when managing a large number of VFL clients and feature distributions.

A possible workflow for the inference phase 23, common to both configurations, is now described.

Upon receiving an inference request from a client 17, the VFL server distributes the trained models stored in the central database to the available VFL clients.

To do so, the VFL server:
obtains 31b client information, including for instance reliability of the VFL clients, obtains the stored models,
obtains 32b model information of the stored models, including for instance model importance of the stored models,
transmits 33b the model information to the VFL clients or to the Client Management Function, and
transmits 34b instructions for assigning the models to the VFL clients.

Then, with the models being assigned to the VFL clients according to the transmitted instructions, the VFL system implements an inference process to generate an inference output and transmit the inference output back to the client 17 having sent the inference request.

As in the training phase, VFL clients may also receive new inference or training requests from other VFL systems while already engaged in an ongoing inference task. In such cases, the new requests may be dealt with in the same way as in the training phase.

Specifically, the VFL client may determine whether to accept the new request based on the relative importance of the models involved and its computational capacity. Additionally, upon accepting a new inference or training request, a VFL client may update its client information, such as its current reliability indicator, to reflect the impact of handling multiple tasks. The client may then transmit this updated information to the VFL server, which may use it to reassess the system's overall reliability and, if necessary, adaptively redistribute local models among other VFL clients to maintain performance.

As in the training phase, if the reliability indicator of a VFL client deteriorates significantly during inference, the VFL server may react by redistributing the affected model to another VFL client that demonstrates greater reliability. This process may also involve re-routing relevant feature data to the newly assigned VFL client to ensure continuity in inference operations.

The reassignment of models during inference may for instance occur under the following conditions:
if another VFL client demonstrates a higher reliability estimate or forecast than the currently assigned VFL client, provided that the model redistribution aligns with established hardware constraints; and/or
if the currently assigned VFL client lacks sufficient computational resources to effectively continue processing the model, making reassignment necessary to maintain inference efficiency.

In such cases, the reassignment of models during inference is implemented by means of the VFL server transmitting 36b instructions for the reassignment. These instructions may be based for instance, on updated client information transmitted 35b by the VFL clients to the VFL server:
a dynamic reliability indicator of the VFL clients, computed based on real-time conditions or forecasted trends during inference, and/or
the current or forecasted computational hardware capacity of each VFL client, ensuring that models are allocated to clients with sufficient processing power to handle them effectively.

In the first configuration, during the initialization phase, the client information influences the selection of feature partitions and, accordingly, the local models assigned to each VFL client. For instance, the client information may comprise reliability indicators of the VFL clients.

In this context, further details are now provided on how the reliability indicators may be obtained or determined.

A reliability indicator of a VFL client may be derived from multiple data sources and may be based on previously defined factors. In particular, the reliability indicator of a VFL client may be computed using historical data and/or predictive models that anticipate changes over time. In some implementations, the VFL server pools reliability indicators from multiple VFL clients and aggregates them to guide feature partitioning and model assignment.

A possible approach involves determining a historical reliability indicator by averaging a plurality of reliability indicators over a past time window of analytics collected at each VFL client. In this case, each VFL client periodically gathers relevant data and derives analytics regarding its past performance, availability, and operational conditions.

Another possible approach involves forecasting a reliability indicator to anticipate conditions over the full training period when the training duration is predetermined. Alternatively, a forecasted reliability indicator may be computed for inference periods, particularly when inference is expected to involve multiple communication rounds. This estimation may be derived as a single projection spanning the entire training phase or as a series of shorter-term predictions segmented across multiple communication rounds in the VFL process.

At each VFL client, predicting a reliability indicator over time is essentially a time-series forecasting problem. Several factors may serve as inputs for this prediction, including: historical statistical data collected at each VFL client;
the duration (set or expected) of the training interval;
network traffic levels;
the status of the core network;
a combination of these factors, for instance weighted based on relevance to the VFL client's operational stability.

By using one or more of these factors, the VFL server may generate a comprehensive reliability indicator for each VFL client before assigning local models. These assessments help ensure that model distribution and resource allocation decisions account for historical stability and/or forecasted conditions, thereby optimizing the learning process in a way that anticipates potential disruptions.

Further details are now provided on factors that may affect reliability indicators.

The historical data may include locally collected reliability indicators that each VFL client has determined for itself. The historical data may be gathered by another network function within the core network, such as a Network Repository Function (NRF) or another network analytics function. A third-party service, potentially located in the edge cloud, may also collect and provide historical data regarding network data analytics functions. Other sources of historical data may be leveraged if they provide insight into the long-term stability of VFL client operations.

Current, past, or expected network traffic levels may be considered, including those related to Guaranteed Bit Rate (GBR) traffic. The traffic level predictions may take into account time-sensitive applications managed by the local NWDAFs. The current, past, or expected traffic levels may be obtained through a network function in the core network or via a third-party service hosted in an edge cloud platform.

The status of the core network may be defined in terms of virtual resources currently allocated to deployed network functions. These virtual resources may include computational power, storage capacity, and/or network bandwidth. The status of the core network may be related to the load on instantaneous physical resources within the RAN or other core network functions responsible for generating the features used in the VFL learning process. The Operation and Maintenance (OAM) function within the core network may provide long-term averaged data regarding the load on physical resources across both the RAN and relevant core network functions involved in the VFL system. A third-party service provider, hosted on an edge cloud platform, may assess and provide insights into the status of the core network to support determining reliability indicators.

The predictive scheme as described herein may generate point estimates of reliability indicators at future time instances throughout the training or inference interval for each VFL client. When determining feature partitions or allocating models during inference, each VFL client may determine the mean of these predicted reliability indicators across the forecasted timeframe before transmitting the determined mean, as an aggregate reliability indicator, to the VFL server where the partitioning or assignment process takes place.

Similarly, the resource availability or computational capacity of each VFL client may be estimated or forecasted over the training duration, if the training period is known in advance. This forecasted resource availability may account for expected variations in computational load, memory constraints, and network bandwidth, ensuring that model assignment aligns with each VFL client's ability to process its assigned feature partition.

Together, the reliability indicator and resource availability/capacity indicator may serve as elements of client information, which enables the VFL server to optimize model distribution and training stability.

A possible workflow for determining feature importance in the first configuration is now described. Since the first configuration assumes a centralized feature partitioning strategy, feature importance is evaluated at the VFL server at least during the initialization phase before assigning subsets of features to VFL clients. Feature importance may however be reevaluated by the VFL server at a later stage, during the training phase or before or during the inference phase.

The VFL server may apply any one of several possible approaches to compute the importance of each feature or subset of features, allowing it to prioritize features that are most relevant to the learning objective while minimizing computational overhead.

Several analytical techniques may be employed to determine feature importance, including correlation-based analysis, game-theoretic approaches, and mutual information estimation. The choice of technique may depend on factors such as data availability, computational efficiency, and the need for interpretability in feature selection. The following techniques may be applied, either independently or in combination.

Correlation analysis is a technique which allows determining a degree of correlation between features and the target labels. Important features are those exhibiting strong correlation with the labels, while less important features display weaker correlation.

Variants of this technique include:
identifying the most and least correlated features based on a correlation threshold, computing the average correlation between all features and labels, then selecting as important the features that deviate significantly from this average, and/or
using clustering techniques to group features based on their correlation with labels, then selecting the most informative clusters.

A Shapley values-based analysis is a game-theoretic technique in which Shapley values represent the contribution of each feature to prediction accuracy. A small-scale centralized model may be trained as a proxy for the larger VFL model, allowing the server to assess how much each feature influences predictive performance.

A global Shapley analysis may also be performed to evaluate feature importance across combinations of features.

Local interpretable model-agnostic explanations (LIME) are a technique that simplifies the overall model to assess feature importance, ensuring that the partitioning strategy is both explainable and optimized for training efficiency.

Mutual information estimation is a technique that involves determining a statistical dependency between features and the corresponding labels. The mutual information is derived from the probability distribution of the features and the probability distribution of the labels, providing an alternative means of quantifying feature relevance.

A combination, or hybridization, of the above techniques may be employed to refine feature importance estimation, leveraging the strengths of different analytical models to enhance feature selection accuracy.

By applying one or more of these techniques, the VFL server may determine which features should be prioritized and assigned to VFL clients, ensuring that each client receives a feature subset that contributes meaningfully to the learning objective while maintaining computational efficiency.

Once the VFL server completes assigning feature partitions among various models and defines each local model's architecture, and accordingly each local model's size, the VFL server may determine the importance of each defined local model based on an aggregate importance of all features designated as its inputs. Thus, the importance of a local model reflects the collective importance of the features it processes.

A possible model distribution or model assignment scheme is now described. This scheme may be implemented at different stages of the VFL process, depending on the configuration at hand. This distribution may occur before training, during training, before inference, or during inference, with the objective to ensure that models are allocated to VFL clients in a manner that optimizes performance, reliability, and resource utilization.

Model distribution may be implemented by applying a rule that accounts for client information, ensuring that models are assigned based on factors such as reliability indicators, resource availability, and computational capacity.

According to one possible rule, the VFL server may distribute the trained models by prioritizing model importance, such that the most important models are assigned to the most reliable VFL clients.

According to another possible rule, the VFL server may take into account both reliability and resource constraints, ensuring that model assignments do not exceed the computational capacity of the VFL clients. In this case, while model importance remains a key factor, model distribution is adjusted to ensure that each assigned model can be processed efficiently within the available computational resources of the selected VFL clients.

A possible approach for implementing such model distribution is a low-complexity assignment algorithm that considers the importance and size of models, as well as the reliability and resource constraints of VFL clients.

This approach may proceed as follows:
sort the trained models by importance (highest to lowest) and sort the available VFL clients by reliability (highest to lowest),
starting from the most important model, attempt to assign it to the most reliable available VFL client,
if the resource constraints of the VFL client are met, assign the model to that client and mark the client as unavailable for further assignments,
if no suitable client is found, mark the model as unassigned and continue the process.

Throughout the VFL process, VFL clients may periodically send updated reliability indicators to the VFL server, enabling dynamic reassignment of models if client conditions change. The model assignment process may accordingly repeat dynamically, ensuring that models remain allocated to the most suitable VFL clients as client reliability fluctuates.

After the local models are assigned to the VFL clients, the VFL server transmits to each selected VFL client and/or to a client management function the up-to-date model importance values associated with the assigned models. These values, previously stored after training (and originally either obtained before training or estimated during training) alongside the trained models, enable the VFL system to optimize a task at hand (a training task or an inference task) by ensuring that models with higher importance are handled by more reliable VFL clients.

In the second configuration, the reliability indicators of VFL clients influence both the initial selection of participating clients and potential feature re-routing decisions. Unlike the first configuration, where the VFL server centrally determines feature partitions and assigns local models accordingly, the second configuration involves a more decentralized approach in which VFL clients locally compute their own reliability indicators and report them to the VFL server.

In particular, if multiple VFL clients generate the same feature partitions required for training, the VFL server may use reliability indicators to select the most reliable clients for training participation. Additionally, if some available VFL clients are deemed more reliable than those originally handling feature generation, the VFL server may opt to re-route features from the original clients to these more reliable ones, while also taking into account computational hardware constraints.

To achieve this, the reliability indicators are first calculated locally at the VFL clients and then transmitted to the VFL server, which aggregates this information before selecting the appropriate VFL clients for training. This process differs from the first configuration, where the VFL server directly computes and assigns reliability indicators before model distribution.

As in the first configuration, a reliability indicator may be derived using historical data and/or predictive models that anticipate changes over time. The methodology for predicting reliability remains consistent between both configurations.

Several factors may serve as inputs for this prediction, including:
historical statistical data collected at each VFL client,
network traffic levels, including past, present, and forecasted values,
core network status, including available computational, storage, and networking resources, feature generation responsibilities, particularly when feature re-routing is considered,
etc.

Alternatively, a combination of the above factors, weighted appropriately, may serve as an input for this prediction.

The reliability forecasting process follows a time-series prediction approach, similar to that in the first configuration. The reliability indicators may be updated locally by the respective VFL clients and/or centrally by the VFL server.

Once computed, a forecasted reliability indicator may be averaged over the full training period (if known in advance) or dynamically adjusted throughout multiple communication rounds in VFL training. This differs from the first configuration, where forecasted reliability indicators are primarily used in the initialization phase to guide feature partitioning.

The predictive reliability process generates a point estimate of reliability at future time instances during the training period. Each VFL client may then compute the mean of its predicted reliability values over the forecasted timeframe and transmit it to the VFL server for decision-making.

As in the first configuration, the resource availability or computational capacity of each VFL client may also be estimated or forecasted over the training time.

A possible approach is now provided to implement the training phase in the second configuration.

Once the VFL clients are selected, the VFL server instructs them to initialize their local models and, if necessary, set up event notification subscriptions in line with TS 23.288 protocols to retrieve features from relevant network functions (NFs) or other VFL clients. In contrast to the first configuration, where models are derived centrally and assigned to clients, here the models are initialized locally at the selected VFL clients.

During training, the importance of each model is dynamically calculated and updated by the VFL server based on the variation in training loss or a function of it. This differs from the first configuration, where model importance is determined before training begins based on the assigned feature partitions.

If all VFL clients exhibit high reliability, the VFL server may synthetically drop clients from training rounds to observe the impact on model accuracy and adjust model importance estimates accordingly. This synthetic dropout technique is used exclusively in the second configuration, as the first configuration relies on predefined importance values.

Throughout training, the VFL server continues to update clients and/or a client management function regarding model importance estimates, ensuring that high-importance models are handled by the most reliable clients.

Similar to the first configuration, VFL clients may receive new training or inference requests from other VFL systems mid-training. In such cases, the decision to accept additional tasks is made based on the relative importance of the models involved and the computational capacity of the VFL clients.

If a VFL client's reliability deteriorates significantly during training, the VFL server may reassign its local model to another more reliable VFL client. This reassignment may also require feature re-routing, ensuring that the newly assigned VFL client receives the appropriate data to continue training without interruption.

The reassignment process in the second configuration follows the same fundamental principles as in the first configuration. Specifically, reassignment may occur when:
a more reliable VFL client becomes available and meets the computational requirements for the model, and/or
the original VFL client lacks sufficient computational resources to continue training the assigned model effectively.

The actual reassignment process also follows a similar workflow:
the original VFL client stores its intermediate local model in a shared model database,
the original VFL client broadcasts a re-routing request for the relevant feature data,
the newly assigned VFL client retrieves the local model from the database and subscribes to the feature stream from the original feature-generating client, and
training resumes at the newly assigned VFL client without requiring a full reset.

Upon completion of training, the trained models, along with their dynamically assessed importance values, are stored in a central model database, similar to the first configuration.

A possible approach is now provided to implement the inference phase in the second configuration.

Upon receiving an inference request, the VFL server dynamically distributes the trained models stored in the central database to the available VFL clients. The VFL server may also instruct the selected VFL clients to establish event notification subscriptions, ensuring that relevant features are retrieved in real-time from network functions or other VFL clients.

The model importance values, which are stored alongside the models, are transmitted to the VFL clients and/or to the client management function, ensuring that high-importance models are handled by the most reliable VFL clients.

As in the first configuration, if a VFL client receives a new training or inference request during inference, it may assess the relative importance of the models involved before deciding whether to allocate resources to the new task.

Additionally, VFL clients may update their reliability indicators during inference and report them to the VFL server. If the reliability of a VFL client deteriorates significantly, the server may redistribute the assigned model to another, more reliable client, potentially involving feature re-routing to maintain inference continuity.

Model reassignment over the inference period is then based on client information, such as:
a dynamic reliability indicator, computed using real-time conditions or forecasted trends during inference, and/or
current or forecasted computational capacity, ensuring that VFL clients assigned to inference tasks can process models efficiently despite fluctuating resource constraints.

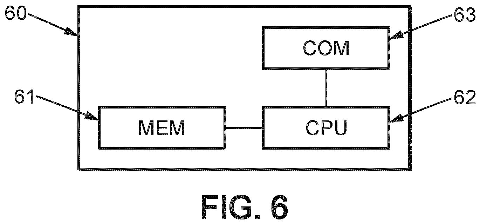

It is now referred to Figure 6, which illustrates a possible processing circuit 60 for implementing a method according to the proposed technique.

The processing circuit 60 comprises a processing unit or processor 62, operably connected to a memory 61 and to a communication interface 63.

The processing circuit is adapted to perform the functions of a VFL server, including communicating with VFL clients, managing model assignments, and overseeing the initialization phase, training phase, and inference phase of a VFL process.

The processing circuit (60) may be implemented as part of a computing device, for instance a server deployed in a core network environment, or may be distributed across multiple computing entities within a computing system, for instance a cloud-based infrastructure or an edge computing system.

## Claims

1. A method performed by a vertical federated learning, VFL server (10, 10a), the method comprising:
obtaining (31, 31a, 31b) client information for a plurality of VFL clients (11, 12, 13, 14, 11a, 12a, 13a, 14a), the client information for a VFL client including data indicative of a reliability and/or a resource availability of the VFL client;
transmitting (34, 34a, 34b) allocation instructions, the allocation instructions defining associations of local models to respective VFL clients, wherein the allocation instructions take account of the client information;
obtaining (35, 35a, 35b) an update to the client information for a VFL client during a use of a local model by the VFL client in a training task (22) or an inference task (23);
transmitting (36, 36a, 36b) at least one updated allocation instruction, an updated allocation instruction defining a reassociation of a local model to a respective VFL client, and wherein
the at least one updated allocation instruction takes account of the update to the client information; and
transmitting (33, 33a, 33b) model information for at least one of the local models, the model information comprising one or more of a model importance, a model size, and a model complexity,
wherein the allocation instructions and/or the at least one updated allocation instruction take account of the model information.

2. The method of claim 1, wherein the model information is transmitted before the use of the local model by the VFL client in the training task or the inference task.

3. The method of claim 1, wherein the model information is transmitted during the use of the local model by the VFL client in the training task or the inference task.

4. The method of any one of claims 1 to 3, wherein:
an update to the model information is transmitted during the use of the local model by the VFL client in the training task or the inference task; and
the at least one updated allocation instruction takes account of the update to the model information.

5. The method of any one of claims 1 to 4, wherein the client information for a VFL client includes a forecasted reliability indicator for the VFL client, the forecasted reliability indicator being computed based on historical data and/or expected resource availability over a time period.

6. The method of any one of claims 1 to 5, wherein the updated allocation instruction defining a reassociation of a local model to a VFL client takes account of a change in client reliability and/or resource availability of at least one other VFL client and/or of a change in model information of at least one other local model.

7. The method of any one of claims 1 to 6, wherein obtaining the update to the client information and/or the update to the model information is repeated at predefined intervals during training or inference.

8. The method of claim 7, wherein the predefined intervals are dynamically adjusted based on a variability of the client information and/or of the model information.

9. The method of any one of claims 1 to 8, wherein the association or the reassociation of a local model to a newly allocated VFL client includes distributing model data of the local model to the newly allocated VFL client.

10. The method of claim 9, wherein the allocation instructions and/or the at least one updated allocation instruction take into account a cost of transferring model data.

11. The method of any one of claims 1 to 10, wherein the client information includes communication latency metrics of the VFL clients.

12. The method of any one of claims 1 to 11, wherein the allocation instructions are generated based on a weighted combination of at least two among client reliability, resource availability, model importance, model size and model complexity.

13. The method of any one of claims 1 to 12, wherein the VFL server initiates reassociation only if the updated client information indicates a threshold change in client reliability, resource availability, model importance, or a combination of at least two thereof.

14. The method of any one of claims 1 to 13, wherein the VFL server stores the allocation instructions and/or the client information and/or the model information in a database (16) for use in a subsequent use of the local model by the VFL client in a subsequent training task or a subsequent inference task.

15. A system adapted for use by a vertical federated learning, VFL, server (10, 10a), the system being configured to:
obtain (31, 31a, 31b) client information for a plurality of VFL clients (11, 12, 13, 14, 11a, 12a, 13a, 14a), the client information for a VFL client including data indicative of a reliability and/or a resource availability of the VFL client;
transmit (34, 34a, 34b) allocation instructions, the allocation instructions defining associations of local models to respective VFL clients, wherein the allocation instructions take account of the client information;
obtain (35, 35a, 35b) an update to the client information for a VFL client during a use of a local model by the VFL client in a training task (22) or an inference task (23);
transmit (36, 36a, 36b) at least one updated allocation instruction, an updated allocation instruction defining a reassociation of a local model to a respective VFL client, and wherein
the at least one updated allocation instruction takes account of the update to the client information; and
transmit (33, 33a, 33b) model information for at least one of the local models, the model information comprising one or more of a model importance, a model size, and a model complexity,
wherein the allocation instructions and/or the at least one updated allocation instruction take account of the model information.
